# EUROPEAN PATENT APPLICATION

(11) **EP 3 293 420 A1**
(43) Date of publication of application: **14.03.2018**
(21) Application number: 17189683.0
(22) Date of filing: 06.09.2017
(51) Int. Cl.: F16H 55/18

(54) **GEAR**

(30) Priority: 09.09.2016 US 201662385721 P; 28.08.2017 US 201715688352
(71) Applicant: Kohler Co., Kohler, WI 53044 (US)
(72) Inventor: LEROY, Tyler W., Plymouth, WI 53073 (US); HARRELD, Timothy, Hattiesburg, WI 39402 (US); FEICK, Mark, Kohler, WI 53044 (US); SUGDEN, Andrew, Kohler, WI 53044 (US)
(74) Representative: Hoefer & Partner Patentanwälte mbB

(57) **Abstract**

A multiple component gear includes a first material for a first portion of the teeth and a second material for a second portion of the teeth. The gear may be manufactured by providing a blank for a multiple component gear, the blank formed from a first material, coupling the blank for the multiple component gear to a mold, adding a second material to the mold to form a second material secured to the blank through overmolding, and forming first teeth in the blank and second teeth in the second material.

## Description

This application claims priority benefit of Provisional Application No. 62/385,721 filed September 9, 2016, which is hereby incorporated by reference in its entirety.

### FIELD

This disclosure relates in general to a multiple component gear for an internal combustion engine.

### BACKGROUND

A gear or cog is a device with teeth. The teeth of one gear may mesh with the teeth of another gear to transfer force. The gear may be mated with at least one other gear to transfer torque or just to translation linear motion to rotational motion. A gear may translate rotational motion from one gear to another gear. The ratio of the speeds of the gears is the same as the ratio to the number of teeth of the gears.

When the gears rotate, especially at high speeds, substantial noise and vibration may be produced from the gears by teeth as they mesh and become unmeshed from one another. Significant efforts have been aimed at reducing the noise and vibration caused by gears in motion. Challenges remain in reducing the noise and vibration caused by gears.

### BRIEF DESCRIPTION OF THE DRAWINGS

Exemplary embodiments are described herein with reference to the following drawings.
FIG. 1 illustrates an example internal combustion engine.
FIGS. 2A and 2B illustrate an example multiple component gear.
FIG. 3 illustrates a cross section of the multiple component gear.
FIG. 4 illustrates a side view of the multiple component gear.
FIGS. 5A and 5B illustrate another example of a multiple component gear.
FIG. 6 illustrates a cross section of the multiple component gear of Figures 5A and 5B.
FIG. 7 illustrates a side view of the multiple component gear.
FIG. 8 illustrates an example flowchart for manufacturing the multiple component gear.
FIG. 9 illustrates another embodiment of a multiple component gear.
FIG. 10 illustrates a mechanically fastened multiple component gear.
FIG. 11 illustrates additional views of a mechanically fastened multiple component gear.
FIGS. 12A and 12B illustrate gear noise charts.
FIG. 13 illustrates another embodiment of a multiple component gear including flexible splines.
FIG. 14 illustrates another embodiment of a multiple component gear including a circumferentially movable section.
FIG. 15 illustrates an example method for manufacturing the multiple component gear of FIG. 14.

### DETAILED DESCRIPTION

Metal cam gears are noisy but durable, and metal cam gears may be relatively thin which takes up less space within the crankcase of an engine. Plastic cam gears are quiet but less durable and require more space within the crankcase. The following embodiments provide cam gears that retain the durability experienced with metal gears and achieve low noise levels experienced with plastic gears.

A multiple component gear includes a first material for a first component of the gear and a second material for a second component of the gear. The second component may have a high flexibility or elasticity (e.g., more elasticity corresponds to a lower modulus of elasticity), the second components have a low flexibility or elasticity (e.g., less elasticity corresponds to a higher modulus of elasticity). The second component may include plastic. The second component may include a resin, or a polymer. The first component may include a metal such as iron, aluminum or steel. The second component may produce less noise than the first component. For example, plastic is a better noise dampening material than metal. Plastic is softer and more elastic so plastic does not produce a ringing (e.g., bell-like ringing) when plastic contacts other materials. The second component may dampen sound otherwise produced by the first component. Each component of the multiple component gear may extend from the shaft upon which the gear is mounted to the full circumference of the gear including the teeth of the gear. The teeth may be helical teeth or spur teeth. The first component is parallel to the second component.

The multiple component gear may be mounted to a drive shaft of an internal combustion engine. Examples for the drive shaft include a camshaft (e.g., a shaft including one or more cams or lobes for operating one or more valves) or a crankshaft (e.g., a shaft driven by a crank). The multiple component gear may have other applications such as a governor gear, or an oil pump gear.

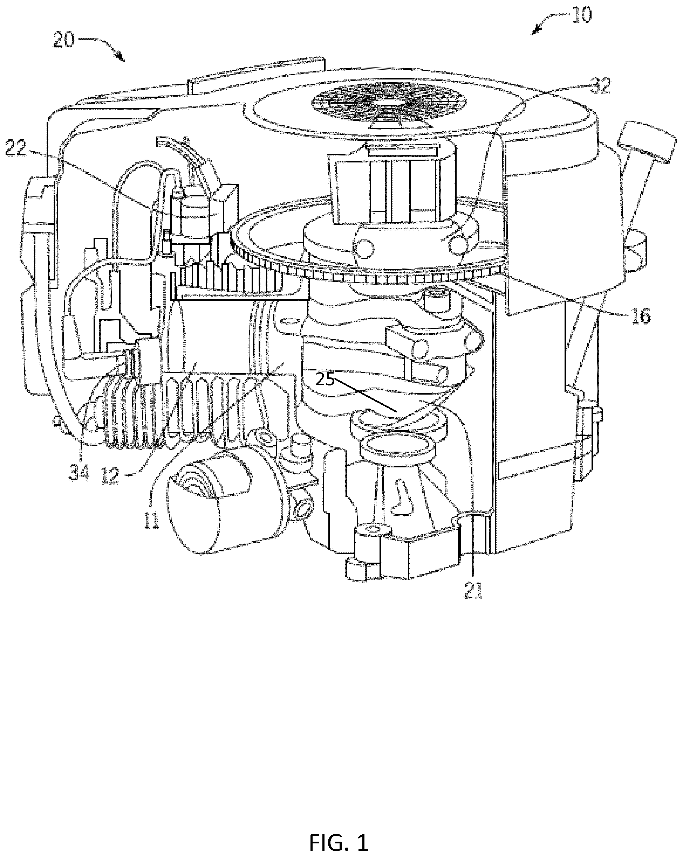

Figure 1 illustrates an example internal combustion engine 10. The engine 10 may include a piston 11, cylinder 12, crankshaft 25, flywheel 16, air cleaning system 20, chamber 21, ignition module 22, sensor 32 and spark plug 34. Additional, different, or fewer components may be included.

The engine 10 may be any type of engine 10 in which the combustion of a fuel (e.g., gasoline or another liquid fuel) with an oxidizer (e.g., air) in a chamber applies a force to a drive component (e.g., piston, turbine, or another component) of the engine 10. The drive component rotates or otherwise moves to perform work. The drive component may rotate the crankshaft including the multiple component gear. The multiple component gear may be coupled with the crankshaft 26 or other components of the engine 10. The phrases "coupled with" or "coupled to" include directly connected to or indirectly connected through one or more intermediate components. Additional, different, or fewer components may be provided.

The engine 10 may power a generator, chainsaw, lawn mower, weed trimmer, all-terrain vehicle, boat engine, go kart, wood splitter, pressure washer, garden tiller, snow blower, or another device. The engine 10 may be a two-stroke engine or a fourstroke engine. The number of cylinders of the engine 10 may vary to include one cylinder, twin cylinder, or another number of multiple cylinders. The size of the engine 10 may vary depending on the application.

A fuel tank stores fuel, which may be provided to the engine 10 from a fuel tank. A variety of fuels may be used. The fuel may be a liquid fuel such as diesel, kerosene, gasoline, or ethanol. The fuel may be a gaseous fuel such as propane or compressed natural gas.

In one embodiment, the fuel is delivered to a carburetor. The carburetor may provide fuel to the cylinders 12 of the engine 10. In another embodiment, the fuel is delivered by a direction injection system or a fuel injection system. At the same time, the air cleaning system delivers clean air from the air cleaning system 20 into the cylinders 12 to facilitate combustion. Combustion within the cylinders 12 is caused by the ignition module 22, which fires the spark plug 34, igniting the fuel air mixture. Timing of the ignition module 22 may be operated by the flywheel 16 as it rotates with the crankshaft relative to the ignition module 22. As a result of the combustion within the cylinders 12, the piston 11 drives the crankshaft 25 to produce engine output. The camshaft includes lobes 3 that spins with the camshaft 14 to open and close valves (e.g., exhaust valves and/or intake valves) as the camshaft 14 rotates under the force or motion applied from one or more pistons. The camshaft 14 may be associated with multiple cylinders (e.g., twin cylinders). Following combustion, the exhaust is directed through a muffler and out of the engine 10.

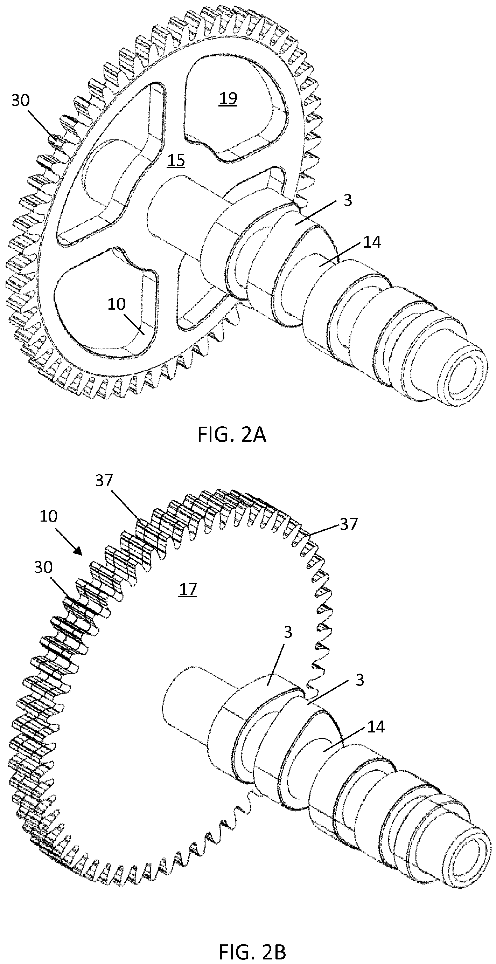

Figures 2A and 2B illustrate an example multiple component gear. Figure 2A illustrates the internal component 10 or metal component of the multiple component gear. The internal component 10 is illustrated with teeth 30 already cut, but the internal component 10 may be a blank that lacks gear (e.g., the outer surface or circumference of the internal component may be generally round in shape or have a relatively constant curvature rather than the series of gear teeth that are illustrated).

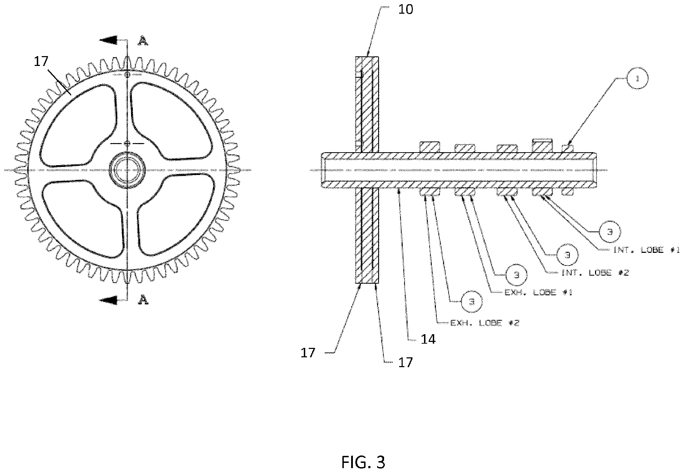

Figure 2B illustrates the entire multiple component gear after the external component 17 of the gear has been formed over the internal component 10. Figure 3 illustrates a cross section of the multiple component gear including example relative widths of the internal component 10 and the external component 17.

The teeth 30 of the internal component 10 may be referred to as internal teeth 10 and the teeth 37 of the external component 17 may be referred to as external teeth 37. Likewise, component 10 may be referred to as internal component 10, and the component 17 may be referred to as the external component 17. However, it should be noted the multiple component gear may include only two layers, in which the internal and external descriptions may be omitted such as first component 10 and second component 17 or first material component 10 and second material component 17.

The internal teeth 30 and the external teeth 37 may be misaligned by a small predetermined distance. That is, the peak of one tooth in the circumferential direction of the internal teeth 30 may be spaced by the predetermined distance to a corresponding tooth in the external teeth 37. In some examples, this spacing or misalignment occurs when the multiple component when the multiple component gear in disengaged from another gear. When the multiple component gear becomes engaged with another gear, the predetermined distance between corresponding teeth in the internal teeth 30 and the external teeth 37 may become smaller as the teeth are brought more in alignment. As the gear rotates, some pairs of the internal teeth 30 and the external teeth 37 are coming into alignment and other pairs of the internal teeth 30 and the external teeth 37 are coming out of alignment. For coming out of alignment, the predetermined distance between corresponding teeth in the internal teeth 30 and the external teeth 37 may become larger as the teeth are brought out of alignment.

Figure 3 also illustrates a thrust washer 1 and lobes 3 for the intake and exhaust. The lobes 3 may have various shapes and sizes. The lobes 3 may have a variable radius around the circumference of the lobe 3. The circumference extends the farthest from the camshaft 14 at the extended portion. The extended portion may encompass a set angle of the lobe 3 such as 80 to 100 degrees. The extended portion may be aligned with cam follower coupled with a valve. The extended portion may be positioned around the camshaft 14 relative to another lobe 3 based on a desired timing of the valves. The lobes 3 may be grouped as intake lobes (labeled int. lobe) and exhaust lobes (labeled ext. love). The intake lobes may be aligned to allow intake air into the cylinder, and the exhaust lobes may be aligned to allow exhaust air out of the cylinder. The lobes are sized and positioned relative to each other based on a timing belt or timing change that controls the combustion cycle stages of the cylinder.

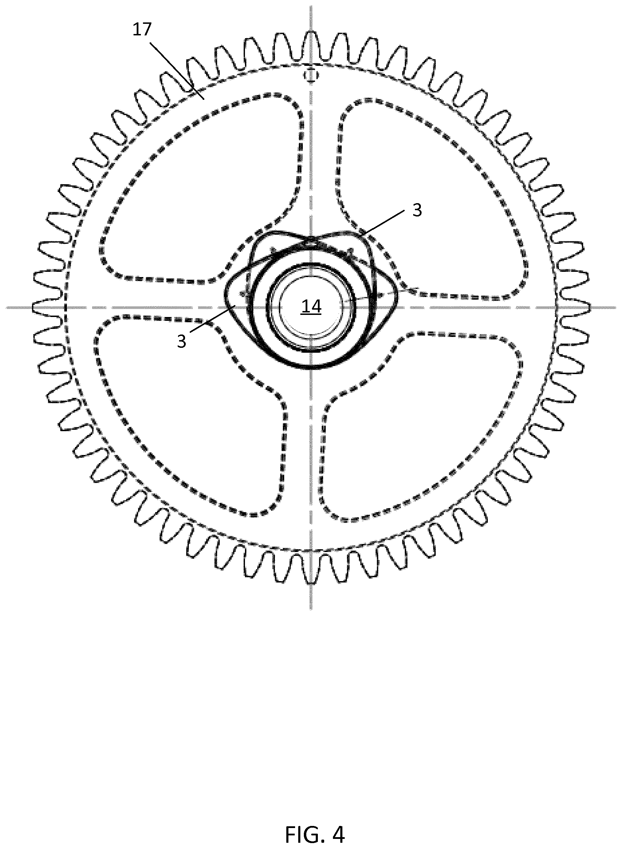

Figure 4 illustrates a side view of the multiple component gear mated with the camshaft 14 including lobes 3. The multiple component gear including dotted lines for opening 19 between the layers of the external component 17.

The internal component 10 includes a solid portion 15 or frame that outlines an opening 19. The opening 19 is formed in solid portion 15 of the internal component 10. The external component 17 may be an overmolded material that molded over the internal component 10. Example materials for the overmolded material include a plastic or another moldable material, and specific examples include polymers such as nylon, polyurethane, delrin, or others. The overmolded material may have a melting point lower than that of the internal component 10. The overmolded material may fill a mold that supports the internal component 10. The overmolded material may flow through the openings 19 such that when the overmolded material hardens, it secures the external component 17 to the internal component 10.

The overmolded material, or external component 17, may have a different hardness that the internal component 10. The term hardness may be measured by deformation or indentation. For example, a Vickers indenter may measure the hardness of the external component 17 and the internal component. The internal component 10 may have a greater hardness (e.g., Vickers hardness) than the external component 17. Other properties that may be related to hardness, such as stiffness, resistance to scratching, resistance to abrasion, and resistance to cutting, may also vary between the external component 17 and the internal component 10. The hardness of the overmolded material may be created by the overmolding process. For example, the temperature of the overmolding process may impact hardness.

Once the external component 17 is molded over the internal component 10, gear teeth are cut in the two components. As described in more detail below, the teeth may be cut through the internal component 10 and the external component 17 at the same time or substantially the same time, after the external component 17 has been molded around the internal component. The term substantially the same time may mean that the internal component 10 and the external component 17 are cut together but the exact dimensions or angle of cutting may impact whether the cutting begins on the internal component 10 and the external component 17 at exactly the same time.

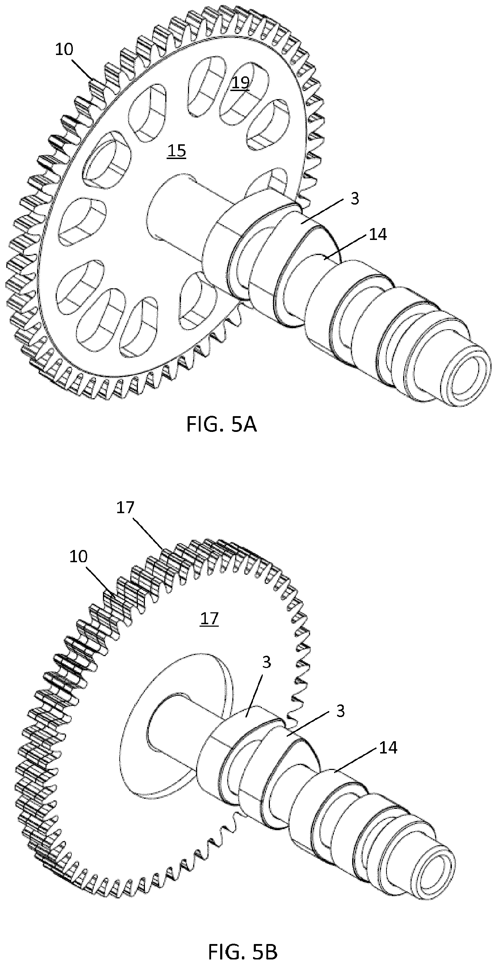

Figures 5A and 5B illustrate another example of a multiple component gear. Similar features are labeled with the same reference numerals. In the example, of Figures 5A and 5B, the solid portion 15 of the internal component 10 makes up a greater proportion of the internal component 10 and the windows or openings 19 make up a smaller proportion of the internal component 10. The ratio of the size of the solid portion 15 to the openings 19 in the example of Figures 2A and 2B may be approximately 2:1 or greater. The ratio of the size of the solid portion 15 to the openings 19 in the example of Figures 5A and 5B may be approximately 1:2 or less. Various ratios, or various sizes for the openings 19 may be selected according to cost and according to the strength of coupling or adhesion between the internal component 10 and the external component 17. The windows or openings 19 may be created in a way to maximize surface area to improve adhesion between the plastic and metal. The windows also help prevent gear growth due to moisture because the windows act as fastening points that help hold the plastic in place.

Assuming the first material (e.g., metal) is at a higher cost than the second material (e.g., plastic), a lower ratio may be selected to reduce cost. The coupling strength (e.g., how well the overmolded material secures the external component 17 to the internal component) may vary proportionally with the size of the openings 19.

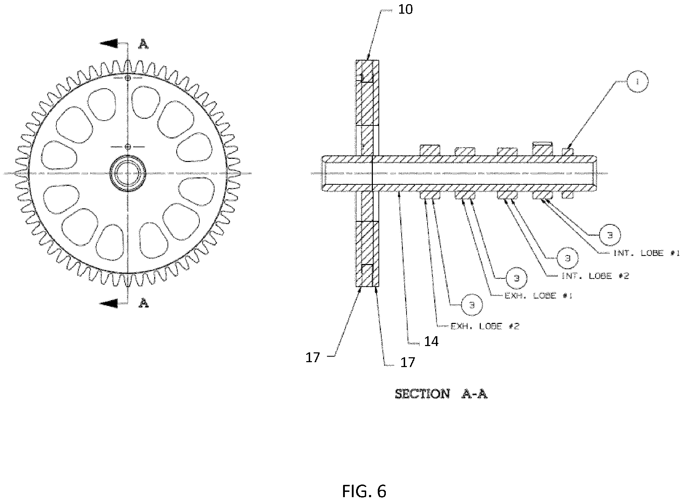

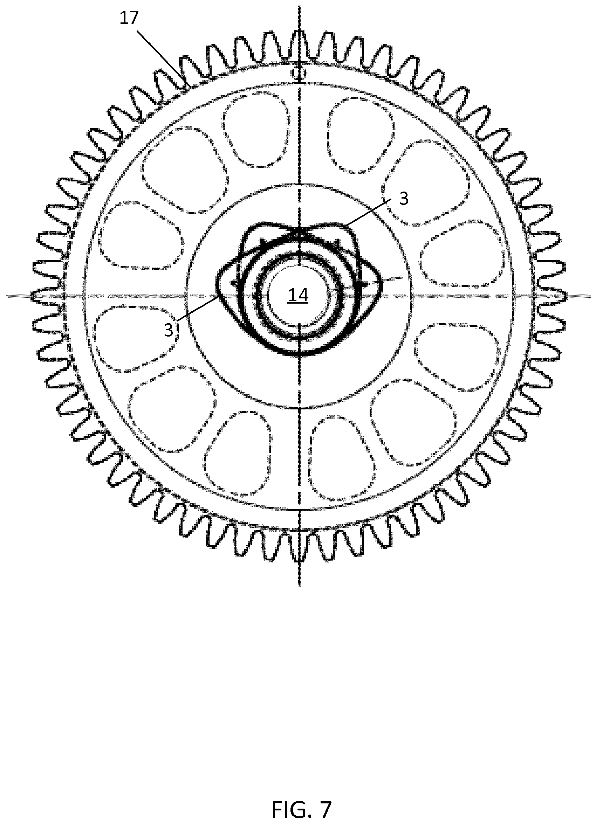

Figure 6 illustrates a cross section of the multiple component gear of Figures 5A and 5B including example relative widths of the internal component 10 and the external component 17. Figure 6 also illustrates a thrust washer 1 and lobes 3 for the intake and exhaust. Figure 7 illustrates a side view of the multiple component gear including dotted lines for internal components.

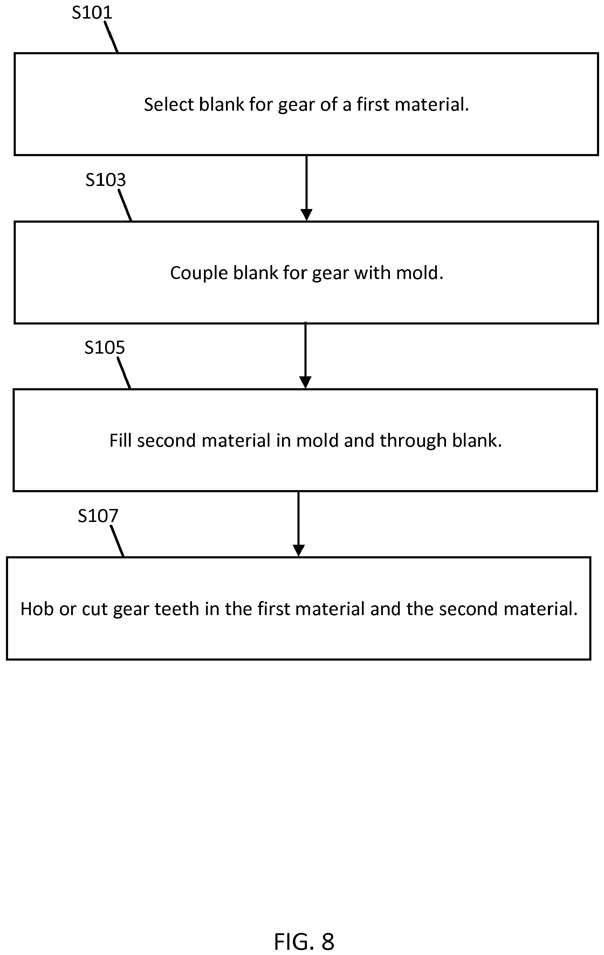

Figure 8 illustrates an example flowchart for manufacturing or otherwise forming the multiple component gear. The acts are performed in the order shown or other orders. The acts may also be repeated.

At act S101, a blank for the gear is selected or provided. The blank for the gear may be formed of a first material, which may include any one or a composite of metal, aluminum, steel, a ferrous material, a non-ferrous material, or another material. The first material may be selected to have a melting point that is greater than a predetermined level or that is greater than that of a second material that is molded over or around the first material.

The difference in elasticity between the first material and the second material may be greater than a predetermined elasticity difference (e.g., 100 megapascals to 20 gigapascals). The first material may be selected to have a hardness greater than a predetermined hardness or that is harder than the hardness of the second material that is molded around the first material. The different in hardness between the first material and the second material may be greater than a predetermined hardness difference (e.g., an indentation difference using the Rockwell hardness technique).

At act S103, the blank for the gear is coupled with a mold. The mold is configured to receive the second material for molded over or around the first material. The blank for the gear may clip, snap, or otherwise connect to the mold. The blank and mold may include a ball and socket, tongue and groove, male and female, and/or another style of mating coupler, respectively, or vice versa.

At act S105, after, or in response to, the blank for the gear being coupled to the mold, the second material is filled into the mold and around the first material. The second material may be poured through opening in the first material.

At act S107, teeth are formed in the first material and the second material. The teeth may be hobbed or cut in the first material and the second material by bringing the multiple component gear in contact with a cutting tool such as a hob. The cutting machine may be a milling machine. For hobbing, the multiple component gear may be mounted on a spindle that is rotated relative to the cutting tool. The cutting tool may receive a user input that sets the spindle for a predetermined number of teeth to be formed in the multiple component gear.

The first material and second material of the multiple component gear may be hobbed or cut simultaneously by the cutting tool. That is, for any cross section of the multiple component gear, the cutting tool may simultaneously cut the metal portion of the gear and the plastic portion of the gear. Because the first material and the second material have different properties, even though the first material and the second material are cut simultaneously, the resulting components may have different dimensions. For example, then the second material is plastic, the plastic may be more elastic and deflect, or give more, than the metal when the cutting tool comes in contact. The plastic then springs back more than the metal when the cutting tool is out of contact with the multiple component gear. As a result, the height of the teeth of the gear at the second portion may be greater than the height of the gear at the first portion. A difference between the height of the gear of the second portion and the height of the gear of the first portion may be approximately 0.0005 to 0.002 inches.

The shape of the teeth creating from hobbing may have one or more predetermined dimensions in a predetermined shape. The predetermined shape may impact the level force from the driving gear applied to the driven gear. The predetermined shape may include a tapered shape, a step shape, or a crown shape. The tapered shape for the gear includes conical surfaces for teeth that may be measured according to a taper angle. The step shape includes a gear tooth with two tapering levels (e.g., the gear teeth is shaped to a first taper angle until a break point and a second tapering angle after the break point). A gear with the crown shape may be a bevel gear including a pitch of approximately 90 degrees. The crown shape may include teeth that project 90 degrees from the face of the gear.

Because the first material and second material of the multiple component gear are hobbed or cut simultaneously by the cutting tool, the accuracy of the size of the teeth of the first portion and the second portion may be improved. In one example, the difference between the height of the gear of the second portion and the height of the gear of the first portion may be selected to minimize the amount of noise produced by the multiple component gear in operation. The teeth of the second portion, which is made of a material that produces less noise, extends farther than the first portion, which is made of material that produces more noise, resulting in quieter operation as the teeth of the multiple component gear contact another gear.

Because the teeth of the multiple component gear are cut rather than molded, a single mold may be used for multiple sizes and shapes of the gear and also multiple pitches, sizes, and quantities of gear teeth. For example, consider an example in which the gear teeth are molded for the second material of the gear. In this instance, a different mold is needed for any variation in the number of teeth, the size of the teeth, the pitch of teeth, or the desired gear ratio. However, the second portion of the multiple component gear may be molded into a larger size and the teeth may be cut down by the cutting tool in a variety of sizes, quantities, pitches, or ratios, using a single mold for all varieties. Likewise, the gear itself may be cut down into a variety of sizes or diameters using a single mold for all varieties. In one example, the first material and the second material are cut after being mounted on a camshaft including one or more lobes. The second material is positioned to be closer to the one or more lobes than the first material.

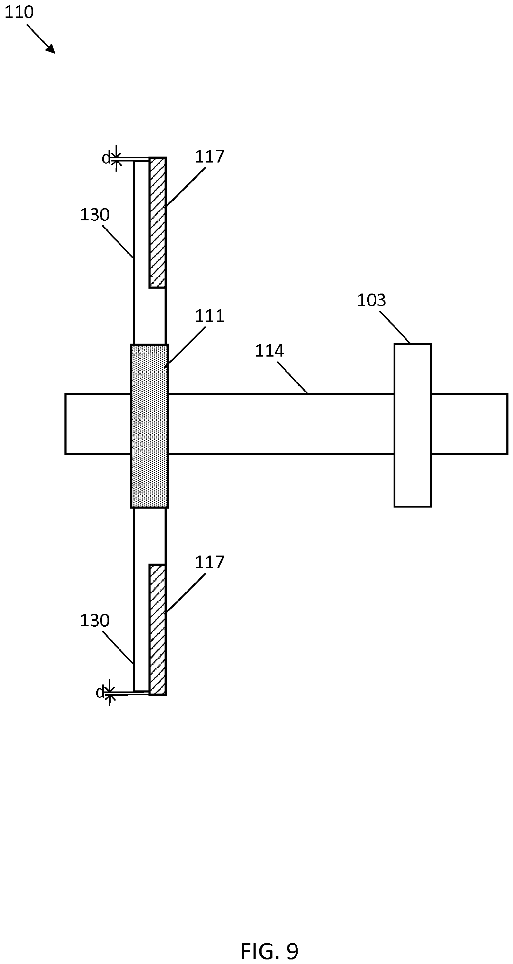

FIG. 9 illustrates another embodiment of a multiple component gear 110. The multiple component gear 110 includes a first component 130 and a second component 117. The multiple component gear 110 is coupled to a hub 111 and a camshaft 114. The hub 111 and the camshaft 114 may be formed integrally of a single piece. The multiple component gear 110 may be press fit or mechanically fastened to the hub 111. The camshaft 114 includes one or more cam lobes 103. In one example, the distance between the cam lobe 103 and the first component 130 is greater than the distance from the cam lobe 103 to the to the second component 117. This arrangement facilitates the simultaneous cutting of the multiple component gear 110 that is integral with the camshaft 114. Additional, different or fewer components may be included.

Both the first component 130 and the second component 117 include gear teeth that are meshed with another gear, which may be a driving gear (e.g., a crank gear). The driving gear applies a force to the first component 130 and the second component 117. The second component may extend a distance d farther toward the driving gear than the first component 130 extends toward the driving gear. In other words, the distance from the hub 111 or the camshaft 114 to the farthest radial point of the second components 117 is greater, by distance d, than the distance from the hub 111 or the camshaft 114 to the farthest radial point of the first component 130. The gear teeth of the first component 130 and the second component 117 are uneven. This causes the teeth of the second component 117 to mesh or come in contact with the driving gear (e.g., crank gear) just before the teeth of the first component 117 come in contact with the driving gear. The material of the second component 117 flexes to allow the driving gear to also come in contact with the first component 130, and in doing so, absorbs some of the force from the driving gear. The second component 117 produces less noise.

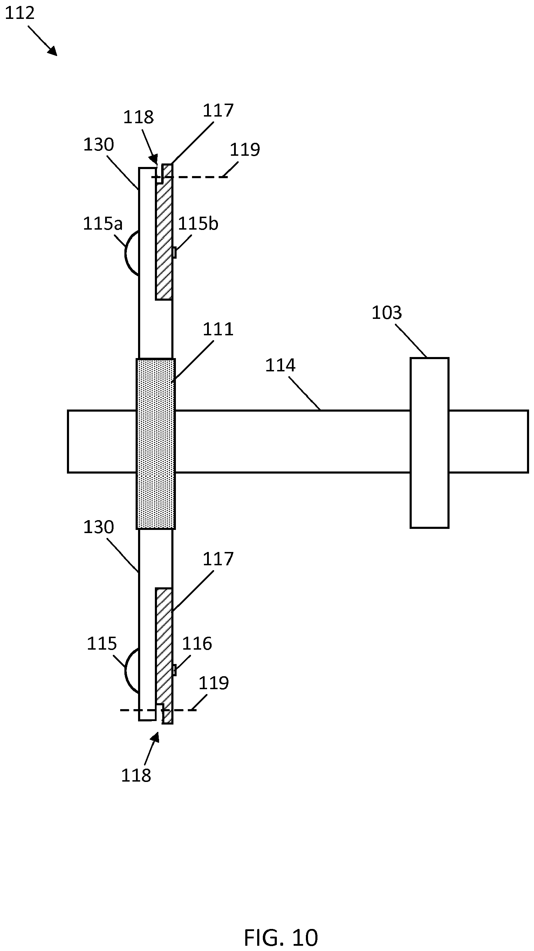

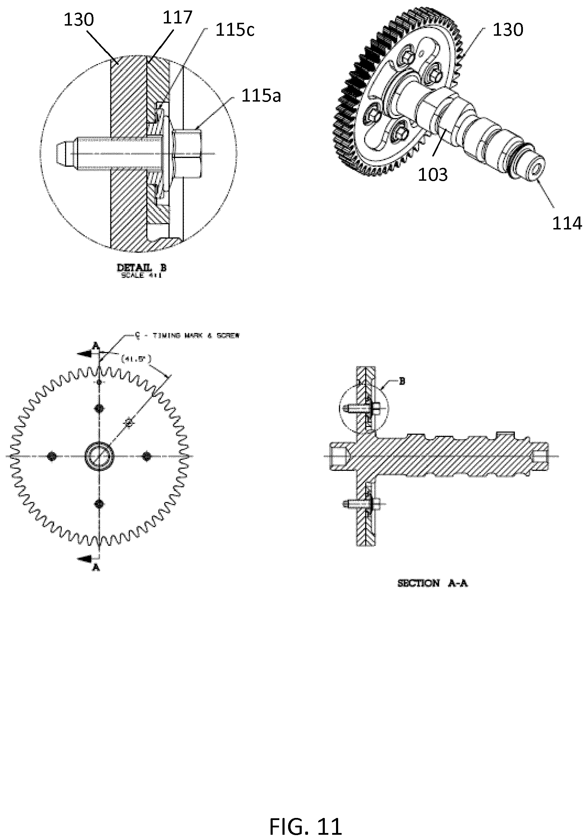

FIG. 10 illustrates a mechanically fastened multiple component gear 112. Some parts were described with respect to FIG. 9. The multiple component gear 112 may include a relief or gap 118, which is a space between the first component 130 and the second component 117. Additional, different or fewer components may be included. FIG. 11 illustrates additional views of a mechanically fastened multiple component gear.

The gap 118 may extended to the root of the tooth or a predetermined distance below the root of the tooth, as shown by dotted line 119. The predetermined distances may be approximately 0.001 to 0.010 inches. The first component 130 and the second component 117 mechanically fastened or physically coupled using a coupler or mechanical fastener. The mechanical fastener may include one or more rivets, one or more bolts and nuts or one or more screws. The rivet may be a permanent mechanical fastener include a head end 115a, a cylinder, and a tail end 115b. The cylinder is provided through a hole in each of the components of the multiple component gear. The tail end 115b of the rivet is deformed to cause the tail end 115b to expand and permanently fasten the components of the multiple component gear. The rivet may also include a gripping portion 115c (shown by FIG. 11) that is tightened onto the second component 117. The gripping portion 115c may include a sharp edge that penetrates at least the surface of the second component 117. The internal component and external component in this embodiment may also be cut or hobbed simultaneously as described herein.

The first component 130 and the second component 117 may be mechanically fastened with a precision alignment fixture to ensure first component 130 and the second component 117 are secured around the entire circumference with no separation (e.g., separation less than a very small distance). The precision alignment fixture includes a base portion and an alignment portion movable within a high degree of accuracy (e.g., less than one thousandth of an inch or 25 microns). The precision alignment fixture may include one or more adjustment mechanisms for aligning the first component 130 and the second component 117 into alignment. A center adjustment mechanism aligns the first component 130 and the second components according to the center lines of the gears. A radial adjustment mechanism aligns the first component 130 and the second component 117 radially. The radial adjustment mechanism may include a spring loaded tooth that matches with the teeth of the first component 130 and the second component 117. After the first component 130 and the second component 117 are aligned radially, the components are fastened together.

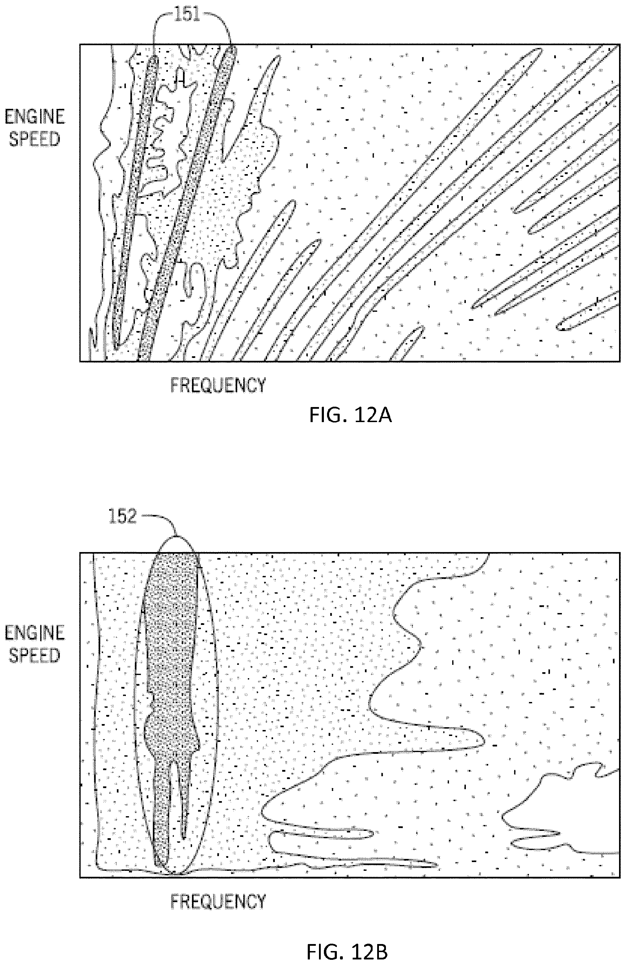

The multicomponent gear has reduced engine sound power by approximately 8 dbA on an 824 cc engine. A metal cam gear has been machined down in thickness (width along axis of rotation). A plastic gear has been bolted on to the metal gear-like a layer in a sandwich. The thickness of the plastic gear replaces the thickness of the metal that was machined away on the metal gear. A plastic blank may be rigidly bracketed onto the metal casting and then the metal/plastic blank are hobbed together to create the teeth. The hobbing process can create the step change in gear tooth width between the metal and plastic gears. A difference in oversizing of the plastic gear tooth may be approximately 0.0005 inches or in the range of 0.0001 to 0.005 inches. The plastic gear is rigidly attached to the metal gear and absorbs the initial impact caused by the torque reversals on the camshaft. The scissors gear has a spring loaded "floating" gear which takes up all of the backlash clearance between meshing teeth. FIGS. 12A and 12B illustrate gear noise charts. In the noise charts, the horizontal axis measures frequency, the vertical axis measures engine speed, and the shading measures sound pressure level, which may be a logarithmic power of the noise or decibels, which higher sound pressure indicated by darker shading. In FIG. 12A, the gear whine is illustrated by narrow slanted shapes 151 in the noise chart. The location of the narrow shapes 151 depends on the meshing frequency of the gear teeth, which is dependent on the size and shape of the gear teeth. The gear whine may be caused by transmission error (e.g., the bending of gear teeth) or increased contact ratio of the gear teeth. In FIG. 12B, rattling is shown by the region 151 in the noise chart. Rattling may be caused by torque fluctuations or reversals or backlash in the gear. The gear rattle may be caused by the impacts of the teeth coming in and out of contact. Two example effective ways to reduce rattle are to soften the impact, by using a lower modulus material (e.g., the second component) or to reduce the backlash in the meshing gear set. By using the multicomponent gear, the second component absorbs the initial impact of the gear teeth, and the first component carries the cyclic load from the meshed gear after impact of the gear teeth. Thus, the multicomponent gear provides noise reduction improvements while maintaining a durable gearset.

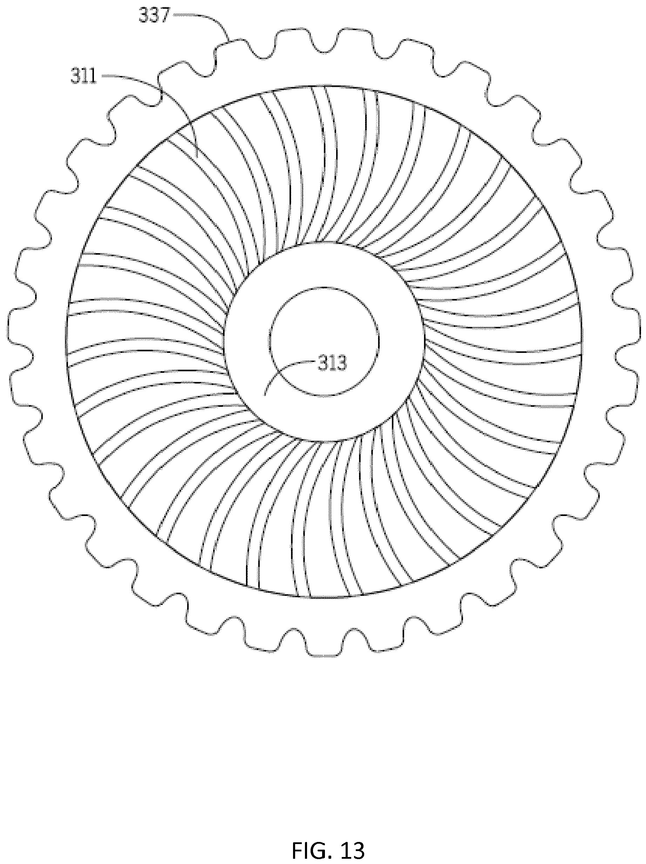

FIG. 13 illustrates another embodiment of a multiple component gear including a gear rim 337, flexible splines 311, and a gear hub 313. Additional, different, or fewer components may be included. The gear of FIG. 13 is a multiple component gear in that the gear rim 337 is one component and the flexible splines 311 are another component. This is a gear that utilizes the bending properties of a spoke of the gear as a spring to eliminate backlash. By eliminating the backlash this will reduce the noise from reversal loads caused by the valve train.

The gear rim 337 includes gear teeth as described herein and mate with a driven gear such as the crankshaft of an engine. The flexible splines 311 movably support the gear rim 337. The flexible splines 311 are coupled to the gear rim 337 and to the gear hub 313. The flexible splines 311 do not extend in a straight path between the gear rim 337 and the gear hub 313.

The shape of the flexible splines 311 may be defined according to a radius of curvature. The radius (e.g., measured through the arc of the center of the spline) of each spline may be constant. An example radius may be in the range of 0.1 to 10 meters. The radius of the spline may be set by the radius of the gear (e.g., the radius of the spline may be related to the radius of the gear by a factor of 10 to 100). The radius of the spline may change along the spline (e.g., a greater radius near the gear hub 313 than near the gear rim 337).

The flexible splines 311 may be spaced a uniform distance apart. In one example, the same number of flexible splines 311 as teeth in the gear rim 337 are used. In another example, fewer splines than the number of teeth in the gear rim 337 are used. The spacing may be selected according to load, engine, speed, or any combination thereof.

The flexible splines 311 may be made of a vibration dampening material. Example vibration dampening material may include types of plastic, elastomers, or other materials. Example materials may include a modulus of elasticity in a predetermined range.

The flexible splines 311 dampen vibrations, and associated noise, caused when the gear rim 337 meshes with the driving gear. As shown in FIG. 13, the gear rotates clockwise, and the driving gear applies a loading force on the gear rim 337 from right to left. The loading force causes movement in the gear rim 337 against the flexibility of the flexible splines 311. The gear rim 337 is also flexible but may be less flexible that the flexible splines 311. That is, the gear rim 337 may have a higher modulus of elasticity (more elasticity) than that of the flexible splines 311. Because the gear rim 337 is less rigid and moves against the flexible splines 311, the vibration and associated noise in the gear rim 337 is reduced.

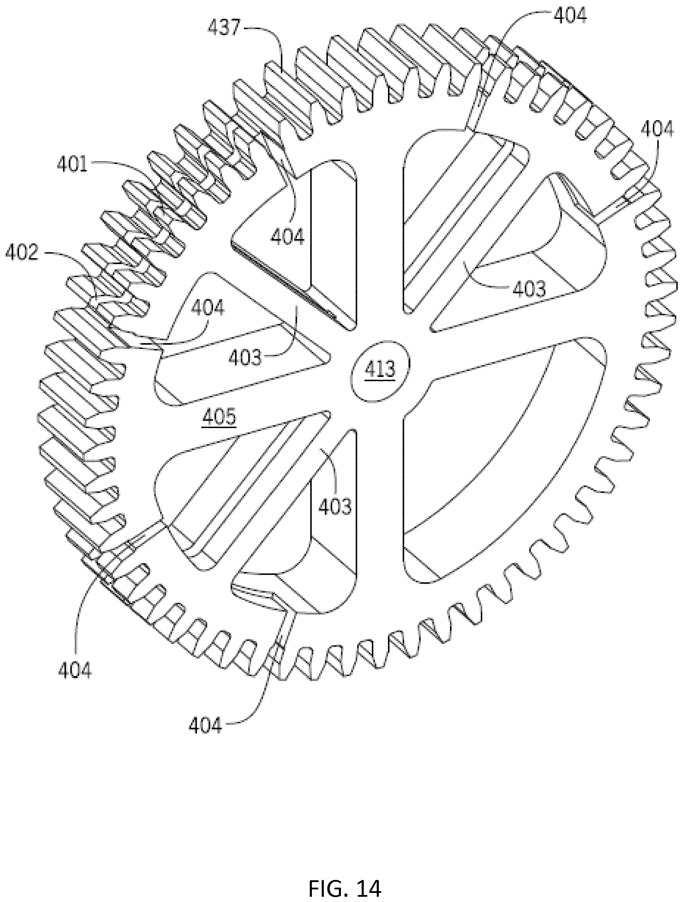

FIG. 14 illustrates another embodiment of a multiple component gear including a gear rim 437 and a circumferentially movable section 401. The multiple component gear also includes a movable supporting member 430 and a rigid supporting member 405 supported by shaft 413. The movable supporting member 430 may be much thinner than the rigid supporting member 405 (e.g., by a factor of 2 to 10). Space 404 is between each movable supporting member 430 and the adjacent rigid supporting member 405. Space 402 is between the gear rim 437 and the circumferentially movable section 401. The gear may be made out of a single gear with sections that are made offset from the rest of the teeth on the gear, so that when the mating gear rolls over them it preloads the spoke "spring." Additional, different, or fewer components may be included.

The multiple component gear of FIG. 14 may include components of different material as described herein (e.g., the gear rim 437 is the first component and the circumferentially movable section 401 is the second component). Alternatively, the gear rim 437 and the circumferentially movable section 401 are made of the same material. The circumferentially movable section 401 may be considered part of the gear rim 437 as a movable section of the gear rim 437, or the circumferentially movable section 401 may be considered a different part than the gear rim 437. The circumferentially movable section 401 may span a predetermined section of the gear rim 437 (e.g., the predetermined section may include a predetermined number of teeth such as 10 to 100 teeth or the predetermined section may include an angle or a predetermined proportion of the gear such as 1/20 to % of the gear).

The gear rim 437 and the circumferentially movable section 401 both include multiple teeth. The teeth may be same size and of the same type. The gear rim 437 includes at least one stationary gear tooth. The circumferentially movable section 401 includes at least one movable gear tooth, which is movable relative to the gear rim 437.

The rigid supporting member 405 is coupled to the gear rim 437 including the stationary gear teeth. The movable supporting member 430 is coupled to the movable gear teeth. The movable supporting member 430 is configured to move relative to the rigid supporting member 405 in response to a loading force received at the movable gear teeth. When the mating gear rolls to the circumferentially movable section 401, the movable gear teeth are forced the gear teeth to align, which puts a load on the movable supporting member 430 to bend and acts like a spring or an anti-backlash mechanism.

The movable gear teeth are spaced from the gear rim 437 by space 402 and the movable supporting member 401 is spaced from the rigid supporting member 405 by space 404. The movable supporting member 401 is spaced from the rigid supporting member 405 in the circumferential direction or the direction of rotation of the gear. The movable gear teeth are spaced from the gear rim 437 in the circumferential direction or the direction of rotation of the gear and the direction perpendicular to the direction of rotation, which is the longitudinal direction of the gear teeth.

The size of the spaces may be defined according to the vibration experienced by the gear. The size of the spaces may be set according to the load experienced by the gear, the speed that the gear is driven, or the type of engine. The space 404 is between each movable supporting member 430 and the adjacent rigid supporting member 405 may be smaller than space 402 is between the gear rim 437 and the circumferentially movable section 401.

The locations of the movable supporting members 430, and accordingly the movable teeth, may be defined according to the application of the gear. The location of the movable supporting member 430 may be set by a predetermined angle between consecutive movable supporting members 430. When the gear is coupled with the camshaft of an engine and/or driven by the crankshaft of the engine, the locations of the movable supporting member 430 may depend on the type of engine, the number of cylinders, the number of valves, the location of the valves, and/or the timing for the valves. Valve springs applies a force to the push road, which applies a force back on the cam lobes in reverse the direction that the gear rotates. The resulting backlash causes noise, which is reduced by the gear illustrated in FIG. 14.

For example, consider a camshaft 14 as shown in FIGS. 2-7. The lobes 3 are positioned according the number of valves in the engine and the location of the valves relative to one another. Each lobe 3 represents one or more load changes or points of vibration changes in the rotation cycles of the gear. The quantity of the movable supporting members 430 may be selected according to the number of lobes 3. The size of the movable supporting members 430 may be selected according to the size of lobes 3. The location of the movable supporting members 430 may be selected according to the relative locations of the lobes 3. In some examples, vibrations caused by two or more of the lobes 3 may overlap in time and may correspond to a single movable supporting member 430. When overlapping lobes 3 are included, the size of the corresponding movable supporting member 430 may be larger to correspond to the overlapping lobes 3, and the quantity of the movable supporting members 430 may be selected as the number of lobes 3 minus the number of pairs of overlapping lobes 3.

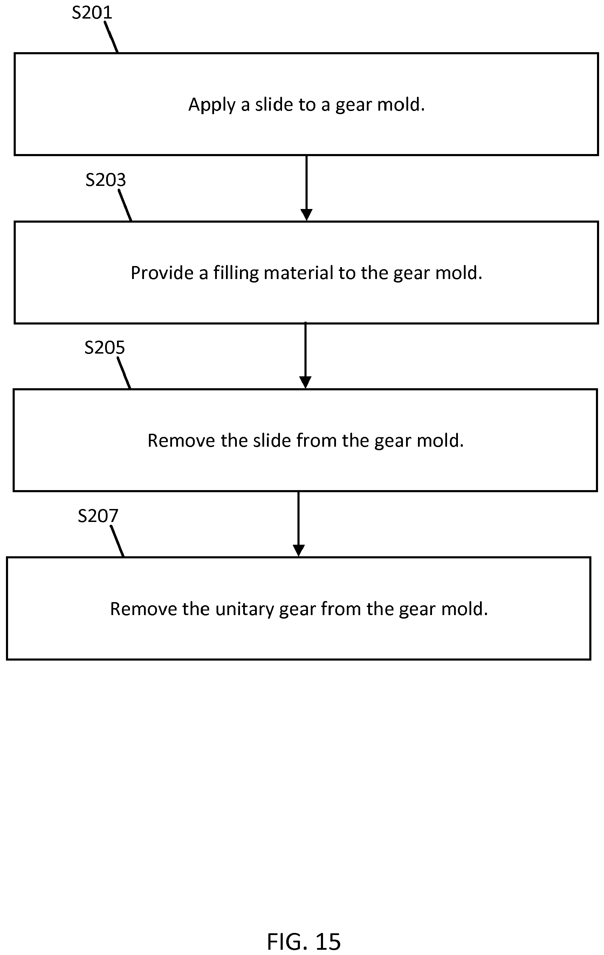

FIG. 15 illustrates an example method for manufacturing the multiple component gear or unitary gear of FIG. 14. The manufacturing process uses a molding technique but other techniques may be used. Additional, different, or fewer acts may be included.

At act S201, a slide is applied or added to a gear mold. The slide is a spacer or rigid component that prevents a portion of the gear mold to be filled. The slide or spacer may be sized to corresponds to the spaces 402 and 404. The slide may include a first set of arms that extend into spaces 402 and a second set of arms that extend in spaces 404. In one example, the slide includes a ring (or a double ring) and the arms extend from the ring. The slide may include multiple individual pieces that correspond to each of spaces 402 and 404.

At act S203, a filling material is applied to the gear mold. The filling material may fill the space inside the gear mold except for the space taken up by the slide. The filling material may fill portions of the gear mold for the gear rim 437 including at least one stationary gear tooth, the rigid supporting member 405, and other portions of the gear of FIG. 14. The filling material may be a powdered metal such as any type of prealloyed, hybrid alloyed, diffusion-allowed, or sinter-hardened powered metal. The mold is pressed and the filling material hardens. A curing time may be required after act S203.

At act S205, the slide is removed from the gear mold. Removing the slide forms the spaces 402 and 404 and in turn, the movable supporting member 403 and movable section 401 having movable gear teeth. The resulting movable section 401 is configured to move in response to a loading force received at the at least one movable gear tooth.

At act S207, the unitary gear including the rigid supporting member 405, the movable supporting member, 403 the at least one stationary gear tooth, and the at least one movable gear tooth is removed from the mold. The resulting unitary gear is formed as a unitary single component.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those skilled in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The Abstract of the Disclosure is provided to comply with 37 C.F.R. §1.72(b) and is submitted with the understanding that it will not be used to interpret or limit the scope or meaning of the claims. In addition, in the foregoing Detailed Description, various features may be grouped together or described in a single embodiment to streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.
The invention can also be described by the following clauses:
1. A method for manufacturing a multiple component gear, the method comprising:
   providing a blank for a multiple component gear, the blank formed from a first material;
   coupling the blank for the multiple component gear to a mold;
   adding a second material to the mold to form a second material secured to the blank through overmolding; and
   forming first teeth in the blank and second teeth in the second material.
2. The method of clause 1, wherein the first teeth and the second teeth are formed simultaneously in the blank and the second material, respectively.
3. The method of clause 1, wherein the first material has a greater indentation hardness than the second material.
4. The method of clause 1, wherein the first material has a lower melting point than the second material.
5. The method of clause 1, wherein the second material produces less noise than the first material when the multiple component gear meshes with another gear or another component.
6. The method of clause 1, wherein the first material has a higher modulus of elasticity than the second material.
7. The method of clause 1, further comprising:
   coupling the multiple component gear to a camshaft of an engine.
8. The method of clause 7, wherein the multiple component gear reduces noise caused by the camshaft of the engine.
9. The method of clause 1, wherein forming first teeth in the blank and second teeth in the second material comprises:
   hobbing the first teeth in the blank; and
   hobbing the second teeth in the second material.
10. The method of clause 1, wherein the first teeth have a different length than the second teeth.
11. A unitary gear comprising:
   a gear rim having a plurality of gear teeth including at least one stationary gear tooth;
   a rigid supporting member coupled to the gear rim and the at least one stationary gear tooth; and
   a movable supporting member coupled to at least one movable gear tooth, wherein the movable supporting member is configured to move relative to the rigid supporting member in response to a loading force received at the at least one movable gear tooth,
   wherein the at least one movable gear tooth is spaced from the gear rim and the movable supporting member is spaced from the rigid supporting member.
12. The unitary gear of clause 11, wherein the unitary gear including the rigid supporting member and the movable supporting member are formed as a unitary single component.
13. The unitary gear of clause 11, wherein the unitary gear including the rigid supporting member, the movable supporting member, the at least one stationary gear tooth, and the at least one movable gear tooth are formed from a mold.
14. The unitary gear of clause 11, wherein the at least one movable gear tooth is spaced from the gear rim in a circumferential direction.
15. The unitary gear of clause 11, wherein the at least one movable gear tooth is spaced from the gear rim in a direction perpendicular to a direction of rotation of the unitary gear.
16. The unitary gear of clause 11, further comprising:
   a plurality of movable supporting members including the movable supporting member, wherein the plurality of movable supporting members are positioned at predetermined locations.
17. The unitary gear of clause 16, wherein the predetermined locations are set by at least one angle between adjacent movable supporting members.
18. The unitary gear of clause 16, wherein the predetermined locations are defined according to a camshaft.
19. The unitary gear of clause 18, wherein lobes of the camshaft correspond to the plurality of movable supporting members.
20. A method of manufacturing a unitary gear, the method comprising:
   adding a slide to a gear mold;
   providing a filling material to the gear mold, wherein the gear mold includes a gear rim having a plurality of gear teeth including at least one stationary gear tooth and a rigid supporting member coupled to the gear rim and the at least one stationary gear tooth; and
   removing the slide from the gear mold to form a movable supporting member coupled to at least one movable gear tooth, wherein the movable supporting member is configured to move relative to the rigid supporting member in response to a loading force received at the at least one movable gear tooth.

## Claims

1. A unitary gear comprising:
a gear rim having a plurality of gear teeth including at least one stationary gear tooth;
a rigid supporting member coupled to the gear rim and the at least one stationary gear tooth; and
a movable supporting member coupled to at least one movable gear tooth, wherein the movable supporting member is configured to move relative to the rigid supporting member in response to a loading force received at the at least one movable gear tooth,
wherein the at least one movable gear tooth is spaced from the gear rim and the movable supporting member is spaced from the rigid supporting member.

2. The unitary gear of claim 1, wherein the unitary gear including the rigid supporting member and the movable supporting member are formed as a unitary single component.

3. The unitary gear of either claim 1 or 2, wherein the unitary gear including the rigid supporting member, the movable supporting member, the at least one stationary gear tooth, and the at least one movable gear tooth are formed from a mold.

4. The unitary gear of any of claims 1-3, wherein the at least one movable gear tooth is spaced from the gear rim in a circumferential direction.

5. The unitary gear of any of claims 1-3, wherein the at least one movable gear tooth is spaced from the gear rim in a direction perpendicular to a direction of rotation of the unitary gear.

6. The unitary gear of any of claims 1-5, further comprising:
a plurality of movable supporting members including the movable supporting member, wherein the plurality of movable supporting members are positioned at predetermined locations.

7. The unitary gear of claim 6, wherein the predetermined locations are set by at least one angle between adjacent movable supporting members.

8. The unitary gear of claim 6 or 7, wherein the predetermined locations are defined according to a camshaft.

9. The unitary gear of claim 8, wherein lobes of the camshaft correspond to the plurality of movable supporting members.
